# FASCICULE DE BREVET EUROPEEN

(11) **EP 0 850 794 B1**
(45) Date de publication et mention de la délivrance du brevet: **03.07.2002**
(21) Numéro de dépôt: 97403151.0
(22) Date de dépôt: 24.12.1997
(51) Int. Cl.: B60J 10/02

(54) **Vitrage équipé d'un cadre en matière plastique, pièces et procédé pour sa fabrication**
Glasscheibe mit einem Umfangrahmen aus Kunststoff, Formkörper und Verfahren zur seiner Herstellung
Glazing with plastics frame, mouldings and method of making the same

(30) Priorité: 30.12.1996 FR 9616183
(43) Date de publication de la demande: 01.07.1998
(73) Titulaire: SAINT-GOBAIN GLASS FRANCE, 92400 Courbevoie (FR)
(72) Inventeur: de Paoli, Martial, 60400 Cuts (FR); Huchet, Gérard, 02600 Retheuil (FR)
(74) Mandataire: Muller, René

(56) Documents cités:
- EP-A- 0 172 103
- EP-A- 0 261 661
- EP-A- 0 521 825
- DE-A- 3 501 490
- DE-A- 4 123 256
- FR-A- 2 188 025
- US-A- 4 543 283

## Description

La présente invention se rapporte à un vitrage, notamment pour véhicule automobile, muni, sur sa périphérie, d'un cadre en matière plastique.

Certains vitrages pour véhicules automobiles sont équipés d'éléments profilés en matière plastique en forme de cadre périphérique, notamment, lorsque le vitrage est fixé par collage dans la baie de carrosserie, pour supporter le cordon de colle de pose ou bien limiter l'expansion de ce dernier, et/ou pour assurer l'étanchéité du montage.

Ces éléments profilés sont de plus en plus souvent réalisés in situ sur le vitrage par extrusion ou par surmoulage de la matière plastique directement sur la périphérie du vitrage (EP-A-0 261 661 on US-A-4 543 283). Ces procédés ne conviennent cependant pas à toutes les formes de vitrages et comportent notamment des inconvénients gênants lorsque le vitrage présente un galbe prononcé ou des coins à angle vif.

Ainsi, le surmoulage sur un vitrage galbé est coûteux en raison de la complexité du moule et délicat par suite des difficultés de centrage du vitrage dans le moule. De même, le parcours d'une buse d'extrusion sur un vitrage très galbé est assez compliqué et cette technique requiert un matériel perfectionné.

Par ailleurs, l'extrusion d'un profilé au bord d'un vitrage dans un coin à angle aigu n'est en général pas satisfaisante car la section du profilé n'est pas régulière et il faut procéder à un surmoulage de matière plastique dans la zone correspondante. Cette solution coûteuse, présente en outre le risque de faire apparaître des raccords inesthétiques le long du profilé.

Dans ces cas particuliers, il serait préférable de fabriquer le cadre à part, notamment par moulage, et de coller ensuite ce cadre préfabriqué à la surface du vitrage. Cependant, toutes les matières plastiques ne sont pas compatibles avec les colles et adhésifs susceptibles de réaliser ce collage, en particulier celles qui contiennent des plastifiants doivent être écartées car ceux-ci ont tendance à migrer vers la surface de collage et à détruire au cours du temps la liaison adhésive.

L'invention a pour but de réaliser le collage d'un cadre en matière plastique sur un vitrage, de façon aisée, efficace, nette, procurant une liaison résistant au vieillissement et aux efforts subis par le vitrage dans son utilisation finale.

Ce but, ainsi que d'autres qui apparaîtront par la suite, est atteint suivant l'invention en utilisant un intercalaire de liaison interposant entre le cadre et le vitrage un élément métallique solidaire du cadre et un élément adhésif réalisant la liaison entre l'élément métallique et le vitrage.

Dans la présente demande, on entend par vitrage un substrat transparent ou translucide, en verre et/ou en matière plastique, monolithique ou feuilleté, ayant éventuellement subi un traitement de surface, tel que l'application d'au moins une couche de préparation translucide ou opaque comme de l'émail.

A cet égard, l'invention a pour objet un vitrage équipé d'un cadre en matière plastique préfabriqué collé sur la périphérie du vitrage par l'intermédiaire d'au moins un intercalaire de liaison, caractérisé en ce que l'intercalaire comprend un élément métallique dont une première face est liée au cadre et au moins une seconde face porte un adhésif au contact du vitrage.

Par « préfabriqué », on entend dans la présente demande que le cadre en matière plastique est fabriqué dans une opération séparée, et est à l'état durci ou essentiellement durci et prêt à la pose par collage sur le vitrage. Le cadre susceptible d'être collé selon l'invention peut être préfabriqué notamment par extrusion ou par moulage d'une matière plastique appropriée.

Le système de collage selon l'invention garantit un collage satisfaisant quelle que soit le matière du cadre, qu'elle contienne ou non des plastifiants. Cette matière peut être choisie en particulier parmi la grande variété des matériaux thermoplastiques, notamment élastomères. A titre d'exemple non limitatif, on peut citer le polychlorure de vinyle souple ou rigide.

L'élément métallique peut se présenter sous diverses formes, à la condition qu'il comporte au moins deux faces. De façon générale, il est préférable que lesdites première et seconde faces soient parallèles entre elles. Très avantageusement, l'élément métallique a la forme d'une bande ou d'un ruban, car cette forme présente un très grand rapport surface/volume et offre donc une surface de collage élevée pour un encombrement réduit. Le vitrage peut être muni d'un intercalaire de liaison unique, dans lequel l'élément métallique est lui-même un cadre découpé aux dimensions du cadre en matière plastique. En variante, il peut comporter plusieurs intercalaires, disposés de place en place sur le pourtour du cadre, en particulier un intercalaire sur chaque côté du cadre.

Le métal constituant l'élément métallique n'est pas particulièrement limité. On pourra préférer des métaux relativement rigides qui confèrent à l'intercalaire de liaison une fonction supplémentaire de renforcement. Parmi les nombreux métaux utilisables, l'aluminium s'est révélé très satisfaisant en raison de son rapport performance/coût.

La liaison rendant la première face de l'élément métallique solidaire du cadre peut être obtenue de façon simple et efficace par différents moyens. On pourra avantageusement réaliser un accrochage mécanique par une liaison à transfert de force et épousement de forme. A cet effet, ladite première face de l'élément métallique comporte des éléments de relief saillants ou rentrants servant de points d'ancrage mécanique. Dans ce cas, la nature de la matière du cadre est indifférente ; en particulier, la migration au cours du temps d'une substance plastifiante n'affecte pas la force d'une telle liaison.

L'élément métallique pourra aussi avantageusement être collé à la surface du cadre par l'intermédiaire d'un adhésif approprié, c'est-à-dire adhérant au métal et à la matière plastique du cadre. On préfère éviter les adhésifs solvantés qui risquent de ne pas être inertes vis-à-vis de la matière du cadre. Parmi les adhésifs préférés figurent les adhésifs thermoactivables, tels que du polyester sous forme de film, qui sont en général compatibles avec les diverses matières plastiques pouvant constituer le cadre. On peut également utiliser un ruban auto-adhésif double face si la matière plastique du cadre est compatible avec ce type d'adhésifs.

La liaison entre la seconde face de l'élément métallique et le vitrage, dans une zone de ce dernier comportant éventuellement un revêtement superficiel tel qu'un primaire d'adhérence ou une couche opaque d'émail, est réalisée par un matériau adhésif.

Suivant une première variante avantageuse, il s'agit d'un ruban auto-adhésif double face. Tout type d'adhésif double face connu en soi, comprenant un support recouvert sur chacune de ses faces d'un adhésif sensible à la pression, convient à la présente invention. De préférence, le support est un patin de feutre ou de matériau expansé, notamment synthétique. Ces adhésifs double-face qui peuvent présenter une adhérence moyenne vis-à-vis des matières plastiques, en particulier celles qui, comme par exemple le polychlorure de vinyle souple, renferment des plastifiants, ont révélé une très bonne adhérence vis-à-vis des métaux, en particulier l'aluminium. Ils présentent en outre une stabilité dimensionnelle qui assure l'intégrité de la surface de collage en toutes circonstances.

Suivant une seconde variante avantageuse, l'élément métallique est lié au vitrage par l'intermédiaire d'une couche d'adhésif thermoactivable. A titre d'exemple non limitatif, on peut citer des adhésifs polyvinyliques ou polyester, qui ont une bonne affinité pour les métaux et pour le verre.

On verra par la suite que cette variante est très avantageuse dans le cas où le cadre en matière plastique présente une gorge longitudinale dans laquelle est insérée la bordure du vitrage, une paroi de ladite gorge recouvrant la face du vitrage qui n'est pas au contact de l'intercalaire de liaison, car cela facilite considérablement la fabrication de tels vitrages.

Selon l'invention, les différents éléments unitaires constituant le vitrage peuvent être assemblés successivement les uns aux autres, éventuellement sous forme de parties préassemblées. A cet égard, l'invention a également pour objet, d'une part un cadre préfabriqué en matière plastique destiné à être collé sur un vitrage, caractérisé en ce qu'il comprend au moins un élément métallique dont une première face est liée à la surface du cadre. De préférence, le cadre est prêt à être collé sur le vitrage et la seconde face de l'élément métallique porte un adhésif destiné à être au contact du vitrage. Un autre objet de l'invention est un intercalaire de liaison destiné à être interposé entre un cadre préfabriqué en matière plastique et un vitrage, caractérisé en ce qu'il comprend un élément métallique dont chaque face est recouverte d'une couche adhésive.

Le cadre prééquipé d'éléments de liaison selon l'invention se caractérise par une stabilité dimensionnelle améliorée due à la présence de l'élément métallique qui joue le rôle d'organe de renforcement. Ce cadre prééquipé, qui a moins tendance à se déformer lorsqu'on le manipule, est plus facile à centrer et à mettre en place sur le vitrage. Ceci est particulièrement utile lorsqu'il s'agit d'un cadre de forme bombée ou galbée destiné à un vitrage de même courbure.

L'invention autorise également, pour équiper un vitrage galbé, l'utilisation d'un cadre plat, c'est-à-dire présentant du côté destiné à être collé sur le vitrage une surface plane avant assemblage, que l'on déforme pour le coller sur le vitrage. La présence d'un élément métallique légèrement déformable dans le cadre initialement plat permet à ce dernier, au moment où on le conforme à la surface du vitrage, de conserver une certaine tenue mécanique. L'aluminium est un métal qui convient très bien à cette variante.

La fabrication d'un cadre plat, par extrusion sur une surface plane ou par moulage dans un moule essentiellement en deux dimensions, étant bien plus économique que celle d'un cadre galbé, usuellement dans un moule en trois dimensions, cette variante va dans le sens d'une diminution du coût de production du vitrage. Cette solution est tout particulièrement avantageuse dans le cas où le cadre profilé présente une section qui varie le long de la périphérie du vitrage. Ce type de cadre est en effet difficile à réaliser par extrusion. L'invention permet de fabriquer, à part, un cadre plat par injection, puis de fixer solidement ce cadre sur le vitrage, qui peut éventuellement être galbé.

On peut fabriquer un cadre prééquipé selon l'invention en apposant un intercalaire de liaison sur un cadre préfabriqué. Lorsque l'intercalaire comprend une couche d'adhésif thermoactivable sur chaque face, il est préférable de choisir deux matériaux de températures d'activation différentes, de sorte que l'une des faces reste intacte lors du collage de l'autre au cadre.

Alternativement, la matière plastique du cadre peut être moulée en présence d'au moins un des éléments, notamment de l'élément métallique, destinés à former l'intercalaire de liaison. A cet égard, l'invention a pour objet un procédé de fabrication d'un cadre tel que défini précédemment, comprenant une étape d'injection de matière plastique dans un moule, caractérisé en ce qu'il comprend une étape préalable dans laquelle on dispose dans le moule au moins un élément métallique muni sur une première face de moyens de fixation au cadre et en ce que l'on maintient cet élément en place dans le moule pendant l'étape d'injection de telle sorte que seule sa première face soit exposée à la matière injectée.

La dépose du matériau adhésif sur l'autre face de l'élément métallique peut avoir lieu dans une étape préalable à l'injection, ou bien postérieure à l'injection.

Dans un mode de réalisation préféré, l'invention propose un procédé de montage sur un vitrage, notamment un vitrage galbé, d'un cadre en matière plastique préfabriqué par injection dans un moule, notamment un moule tridimensionnel, comprenant les étapes consistant à :
- disposer dans le moule au moins un élément métallique muni sur une première face de moyens de fixation au cadre, et éventuellement sur une deuxième face d'une couche adhésive,
- injecter dans ce moule la matière plastique,
- ouvrir le moule,
- le cas échéant disposer une couche adhésive sur une deuxième face de l'élément métallique,
- coller le vitrage sur ladite couche adhésive, et
- extraire du moule l'ensemble constitué par le vitrage et le cadre.

Lorsqu'on souhaite une liaison cadre-métal par accrochage mécanique, le moulage de la matière plastique sur des formes en saillie ou en retrait de la première face de l'élément métallique crée sur le cadre les formes complémentaires réalisant l'épousement de forme.

Suivant un autre mode de réalisation avantageux, où l'on forme une liaison adhésive entre le cadre et le métal, on dispose sur la face de l'élément métallique exposée à la matière injectée une pièce d'adhésif thermoactivable qui sera activée par la chaleur de la matière injectée. De préférence, la température d'activation de l'adhésif est proche de la température d'injection.

Lorsque l'une des liaisons cadre-métal et métal-vitrage est réalisée par l'intermédiaire d'un adhésif thermoactivable, l'invention propose une solution très avantageuse pour activer l'adhésif qui consiste à provoquer l'échauffement de la matière adhésive par effet Joule en faisant passer du courant électrique dans l'élément métallique au contact de ladite matière thermoactivable. A cet effet, dans un vitrage ou dans un cadre prééquipé selon l'invention, l'intercalaire de liaison peut être avantageusement équipé de moyens de raccordement de l'élément métallique à une source de courant électrique.

A l'inverse, une fois que le cadre est lié au vitrage, l'effet Joule peut être utilisé pour fondre l'adhésif et faciliter le décollage du cadre en vue d'un éventuel recyclage.

Par ailleurs, la conduction électrique dans l'élément métallique permet le cas échéant d'alimenter des accessoires liés au vitrage.

D'autres avantages et particularités de l'invention apparaîtront dans la description détaillée qui va suivre, faite en regard des dessins annexés sur lesquels :
- la **figure 1** représente une vue en perspective d'un vitrage selon un premier mode de réalisation de l'invention,
- la **figure 2** représente un détail en coupe longitudinale du vitrage de la figure 1,
- la **figure 3** représente une vue en coupe d'un moule utilisable pour réaliser le cadre équipant le vitrage de la figure 2,
- les **figures 4 et 5** représentent des vues en coupe transversale de deux vitrages suivants deux autres modes de réalisation de l'invention,
- la **figure 6** représente une vue en coupe transversale d'un vitrage, monté dans une baie de carrosserie, correspondant à un quatrième mode de réalisation de l'invention,
- la **figure 7** représente une vue en coupe transversale d'un vitrage monté sur un élément de carrosserie mobile, suivant un cinquième mode de réalisation de l'invention.

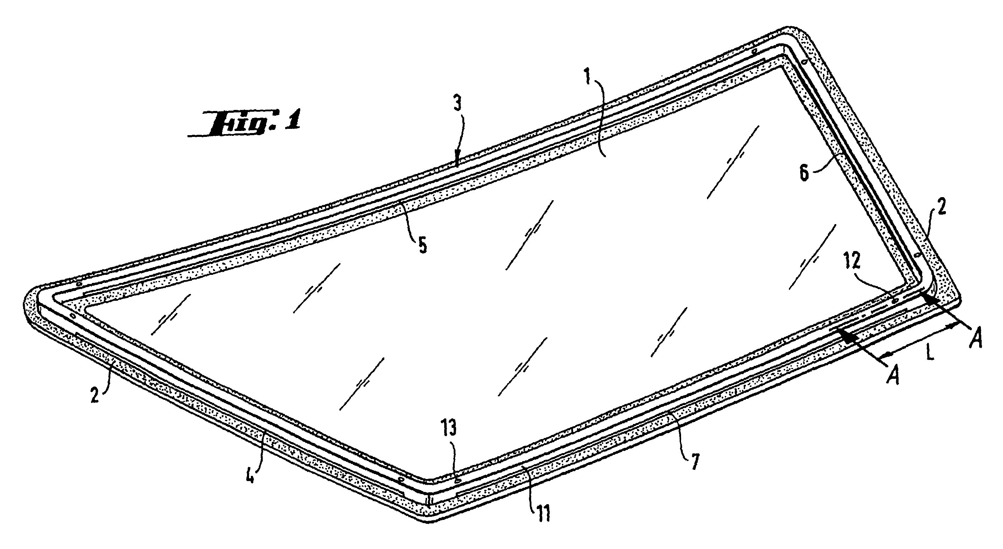

Le vitrage représenté sur la figure 1 est un vitrage automobile prêt à être monté dans une baie de carrosserie d'un véhicule. Il comprend un substrat 1 en verre recouvert dans sa zone marginale d'une couche de préparation 2 opaque, notamment d'émail, et équipé sur cette zone marginale d'un cadre périphérique 3 en matière plastique lié au substrat par l'intermédiaire de quatre intercalaires de liaison 4, 5, 6, 7 sous forme de plaquettes ayant respectivement chacune sensiblement la longueur d'un côté du cadre.

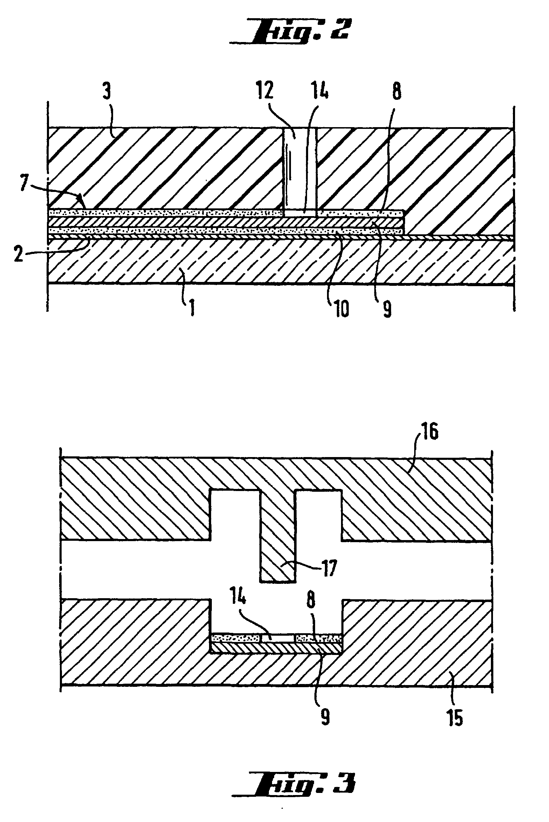

La structure de chaque intercalaire est visible sur la figure 2 qui représente une vue en coupe transversale du vitrage suivant l'axe A-A, sur un segment de longueur L situé au voisinage d'un coin du vitrage.

L'intercalaire de liaison 7 se compose de trois éléments superposés : une couche d'adhésif thermoactivable 8 tel que du polyester, un élément métallique 9 sous forme d'un ruban d'aluminium, et une couche d'adhésif thermoactivable 10 tel que du polyéthylène de température d'activation inférieure à celle de la couche 8, chacun de ces éléments ayant des dimensions sensiblement égales à celles du côté 11 du cadre 3. Dans un exemple particulier de réalisation de l'invention, l'épaisseur du ruban métallique 9 est d'environ 0,2 mm et celle des couches 8 et 10 d'environ 0,1 à 0,2 mm.

L'intercalaire est disposé de façon à ce que le cadre 3 soit lié à la première face du ruban d'aluminium 9 par l'intermédiaire de la couche de polyester 8, et que le revêtement superficiel 2 du substrat 1 soit lié à la seconde face du ruban métallique 9 par l'intermédiaire de la couche 10.

La fabrication du vitrage comprend de préférence un premier temps où l'on équipe le cadre 3 avec des éléments métalliques tels que l'élément 9, qui serviront à former les intercalaires de liaison. Pour cela, on peut coller lesdits éléments métalliques sur un cadre préalablement moulé ou extrudé, ou bien rendre les éléments métalliques solidaires du cadre au moment même du moulage de ce dernier.

Le vitrage représenté sur la figure 1 illustre cette dernière variante de fabrication. Le cadre 3 est pourvu d'orifices 12, 13 qui débouchent aux extrémités de l'intercalaire 7, en coïncidence chacun avec un trou 14 formé dans la couche de polyester 8. Ces orifices qui sont issus du procédé de moulage décrit ci-après, peuvent servir entre autres, à introduire des connecteurs destinés à alimenter l'élément métallique en courant électrique, par exemple pour alimenter des accessoires électriques liés au vitrage.

La figure 3 représente une vue en coupe transversale d'un moule utilisable pour réaliser le cadre 3, qui comprend un demi-moule inférieur 15 et un demi-moule supérieur 16 complémentaire, présentant respectivement deux évidements dont les sections mises en coïncidence définissent le profil du cadre 3. Le demi-moule supérieur comporte au voisinage des angles du cadre 3 des pions 17 verticaux définissant l'emplacement des orifices 12, 13.

Le procédé de fabrication du cadre comprend une première étape où l'on dispose au fond de chaque partie rectiligne formant la moitié inférieure du cadre dans le demi-moule inférieur 15, l'élément métallique 9 et ses trois homologues. Puis, sur la première face de chaque élément métallique, on dispose un ruban 8 d'adhésif thermoactivable à une température proche de la température d'injection. Les demi-moules 15 et 16 sont alors prêts à être refermés l'un sur l'autre.

Lors de l'injection de la matière plastique dans le moule fermé, les pions 17 venus en appui sur les rubans d'adhésif 8 jouent le rôle de doigts de maintien qui plaquent les éléments métalliques 9 au fond du moule. De préférence, le ruban d'adhésif 8 comporte un trou 14 dans lequel s'insère le pion 17. Alors que la matière plastique injectée remplit l'espace intérieur du moule, l'adhésif 8 s'échauffe sous l'action de la chaleur apportée par la matière plastique.

Après l'injection, a lieu une étape de refroidissement au cours de laquelle la matière plastique injectée se solidifie sous la forme du cadre 3 et l'adhésif 8 se solidifie également et réalise la liaison entre le cadre et les éléments métalliques.

A l'issue de l'opération de moulage, le cadre ne comporte pas encore des intercalaires de liaison complets, et il reste à interposer les rubans adhésifs 10 entre le cadre et le vitrage pour procéder au montage. Une solution avantageuse consiste à utiliser des ruban d'adhésif thermoactivable auto-adhésifs à froid et donnant un collage définitif après activation thermique. Il suffit alors de déposer les rubans 10 sur les éléments métalliques 9, et le cadre est prêt à être monté sur le vitrage, éventuellement après une certaine période de stockage.

En variante, ces rubans 10 de matière thermoactivable auto-adhésive à froid peuvent être disposés dans le moule, préalablement à l'injection, sur la seconde face des éléments métalliques 9, sous réserve que leur température d'activation soit supérieure à la température d'injection et qu'ils n'adhèrent pas à la surface du moule.

Un mode de réalisation particulier met à profit la présence des orifices 12, 13 pour fixer le cadre sur le vitrage. Pour réaliser le collage définitif du cadre 3 sur le verre, on introduit des fils électriques dans les orifices 12 et 13, qui viennent au contact des éléments métalliques 9 via les trous 14.

On fait ensuite passer du courant électrique à travers chaque élément métallique 9, avec une intensité telle que la quantité de chaleur dégagée par effet Joule permet d'activer l'adhésif 10 sans refondre l'adhésif 8. Dès que l'on fait cesser le passage de courant électrique dans les fils, l'adhésif 10 se solidifie en refroidissant, pour donner une liaison solide entre le ruban métallique 9 et le revêtement superficiel 2 du vitrage 1. Avantageusement, le tout est placé sous un cadre presseur qui maintient la cohésion de l'ensemble.

Cette technique permet, en particulier dans le cas de vitrages de forme complexe, de procéder au collage définitif seulement après que le cadre a été bien positionné sur le vitrage. On augmente ainsi la précision de l'assemblage.

On notera que ce système permet également de procéder aisément au démontage du cadre : en appliquant à nouveau un courant électrique dans l'élément métallique, le matériau thermoplastique 8 s'échauffe et se ramollit, éventuellement jusqu'à atteindre l'état fondu, et l'on peut alors séparer très facilement le cadre 3 du vitrage 1.

Il va de soi que le chauffage par effet Joule dans les éléments métalliques est une technique parmi d'autres pour activer l'adhésif 10, et elle peut être remplacée par toute technique de chauffage appropriée connue du spécialiste. Lorsque l'on ne souhaite pas faire passer un courant électrique dans les éléments métalliques 9, il n'est pas obligatoire de doter le cadre 3 des orifices 12, 13 et 14.

Dans le vitrage représenté sur la figure 2, les deux faces de l'élément métallique 9 sont liées à un adhésif thermoactivable.

Alternativement, on peut remplacer l'adhésif thermoplastique 10 par un adhésif double-face sensible à la pression. La mise en oeuvre de ce mode de réalisation reste simple et peu onéreuse. Comme précédemment, une première possibilité consiste à appliquer des rubans auto-adhésifs double face sur les éléments métalliques 9 après le moulage du cadre. Une autre possibilité consiste à coller les rubans auto-adhésifs sur les éléments métalliques avant de mouler le cadre. Après avoir retiré une feuille de protection de rubans auto-adhésifs découpés à la forme des éléments métalliques 9, et collé la face adhésive sur le métal, on dispose le composite ainsi obtenu dans le demi-moule inférieur 15 avec la feuille de protection restante en contact avec la surface du moule. Le moulage se fait ensuite de la façon décrite ci-dessus. Dans cette variante, le ruban auto-adhésif est avantageusement choisi parmi les matériaux résistant à la pression et à la température d'injection de la matière plastique.

Le collage du cadre sur le verre se fait par simple pression, après avoir retiré la seconde feuille protectrice de l'adhésif double-face. Dans ce cas, les orifices 12, 13 et 14 ne sont plus indispensables pour le collage, mais peuvent être conservés pour d'autres fonctions, notamment pour centrer le vitrage lors de son montage dans la baie de carrosserie.

Une fois démoulé et muni des intercalaires de liaison, le cadre peut être mis en place très aisément sur le substrat 1 car sa manipulation est facilitée par la tenue mécanique que lui confèrent les éléments métalliques.

Suivant un autre mode de réalisation, où le cadre est fabriqué par injection de matière plastique dans un moule, l'assemblage des intercalaires de liaison se fait alors que le cadre est toujours dans le moule, et c'est le substrat 1 que l'on vient positionner sur le cadre avant que celui-ci ne soit démoulé. Le substrat est mis en place sur le cadre en utilisant éventuellement des repères attachés au demi-moule inférieur 15, et l'on procède au collage final en pressant le substrat sur l'adhésif 10, le cas échéant tout en activant thermiquement ce dernier. Si l'adhésif 10 est un adhésif double-face, la seconde feuille de protection est bien entendu retirée alors que le cadre est toujours dans le moule.

Ce procédé, dans lequel on supprime l'opération de démoulage du cadre avant l'assemblage sur le verre, est adapté à une fabrication automatisée notamment dans un dispositif de type carrousel, dans laquelle le démoulage du cadre se fait en même temps que la manipulation finale du vitrage équipé. De cette façon on réalise aussi bien le collage d'un vitrage plan sur un cadre plat, que le collage d'un vitrage galbé sur un cadre à surface tridimensionnelle.

Le cadre en matière plastique équipant les vitrages selon l'invention peut prendre des formes très variées suivant la fonction à laquelle il est destiné.

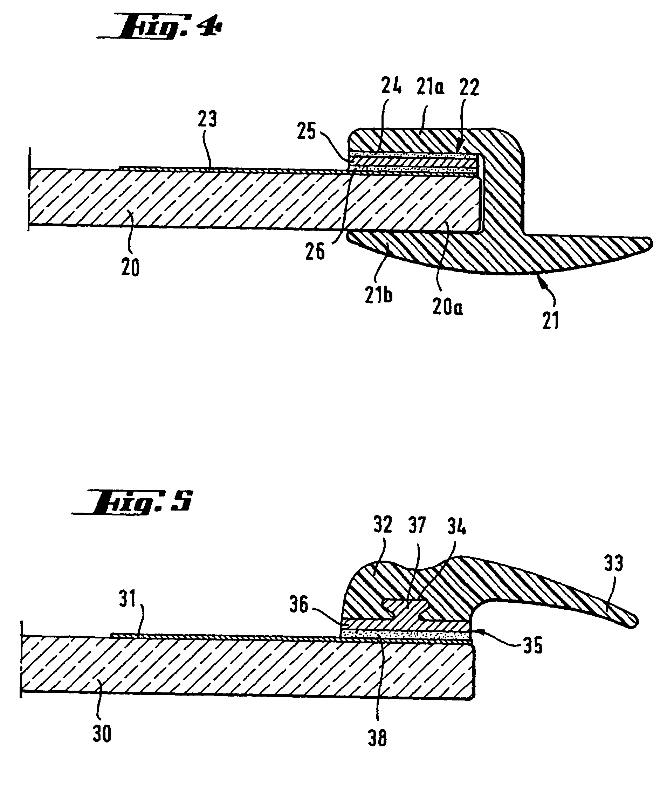

Dans le mode de réalisation représenté sur la figure 4, le cadre s'étend sur chaque face du substrat, de part et d'autre du chant de ce dernier. Le vitrage comprend ainsi un substrat en verre 20 et un cadre 21 en matière plastique présentant une gorge longitudinale enchâssant la bordure 20a du substrat, le cadre 21 étant collé au substrat par l'intermédiaire d'un intercalaire de liaison 22 qui adhère à une couche d'émail 23 déposée sur la zone marginale du substrat. L'intercalaire 22 se compose d'une couche d'adhésif thermoactivable 24 qui adhère à une première paroi 21a de ladite gorge, d'un ruban métallique intermédiaire 25 et d'une seconde couche d'adhésif thermoactivable 26 qui adhère à l'émail 23. L'intercalaire 22 peut être d'un seul tenant sous forme d'un cadre susceptible de s'insérer dans la gorge du cadre 21, ou bien on peut utiliser plusieurs intercalaires, chacun sous forme d'une plaquette aux dimensions d'un côté du cadre 21. La seconde paroi 21b de ladite gorge est en appui sur la face du substrat opposée à la couche émaillée.

Ce vitrage peut très avantageusement être produit en utilisant le procédé de collage électrique décrit plus haut. Le montage de ce vitrage est très simple : dans un premier temps, on fabrique d'une part le cadre 21 par moulage et d'autre part le ou les intercalaires 22. Le substrat est ensuite encastré dans le cadre 21, en déformant légèrement ce dernier de façon à glisser la bordure 20a du substrat, entre les parois 21a et 21b de la gorge, puis on vient glisser dans l'espace libre entre la couche émaillée 23 et la paroi 21a, le ou les intercalaires 22. Il suffit ensuite de chauffer les deux couches thermoactivables 24 et 26, avantageusement par effet Joule comme décrit ci-dessus, pour réaliser la liaison adhésive entre le cadre et ce substrat.

Le vitrage représenté sur la figure 5 illustre un autre mode de réalisation de l'invention dans lequel l'élément métallique de l'intercalaire de liaison est accroché mécaniquement au cadre profilé.

Ce vitrage comprend un substrat en verre 30 dont une face a été revêtue dans sa zone marginale d'une couche émaillée 31. En bordure de cette couche 31 se trouve un cadre en matière plastique 32, notamment en matière plastique élastomère, qui présente une lèvre longitudinale 33 s'étendant à l'extérieur du substrat 30, et une rainure longitudinale 34 évasée dont la section s'élargit en direction du coeur du profilé. Le cadre 32 est fixé sur le vitrage grâce à un intercalaire de liaison 35 constitué d'un élément métallique 36, dont une face présente un relief saillant 37 complémentaire de la rainure 34, et l'autre face est munie d'un ruban auto-adhésif double face 38.

La section évasée de la gorge 34, plus étroite à l'interface entre le cadre et l'élément métallique, et l'épousement de forme du relief 37 avec cette gorge, garantissent un accrochage mécanique efficace de l'intercalaire 35.

Avantageusement, le cadre 32 est réalisé par injection de matière plastique dans un moule renfermant déjà l'élément métallique 36, ce qui garantit un épousement de forme parfait et économise une opération d'insertion de l'élément métallique dans la rainure 34.

Cependant, le moulage du cadre 32 dans un moule renfermant un simple noyau peut également être envisagé. Dans ce cas, on peut imaginer diverses variantes pour l'assemblage des éléments, dont les suivantes sont les plus intéressantes :
- on assemble l'élément métallique 36 sur le cadre 32, puis on colle sur l'autre face de l'élément métallique le ruban auto-adhésif 38, pour obtenir un cadre prêt à être posé sur le substrat 30,
- on colle d'abord une face du ruban auto-adhésif 38 sur l'élément métallique 36, puis on fixe ce composite sur le substrat 30 par collage de l'autre face du ruban auto-adhésif, le substrat étant alors prêt à recevoir le cadre 32, ou bien l'on fixe ce composite sur le cadre 32 pour obtenir un cadre prêt à poser comme précédemment.

Comme on vient de le voir, le système de collage selon l'invention autorise un nombre élevé de variantes qui le rendent adaptable à tous les cas de figure. On réalise ainsi un collage satisfaisant quelle que soit la matière du cadre, même lorsqu'il s'agit d'une matière rendue souple par des agents plastifiants.

Le système selon l'invention autorise notamment une grande liberté dans le choix de la matière constituant le profilé.

Par ailleurs, la présence de l'élément métallique procure au cadre prééquipé selon l'invention une géométrie plus stable en étirement, rendant sa manipulation plus facile avec un outillage moins sophistiqué.

En outre, dans le vitrage selon l'invention, la liaison entre le cadre et le substrat est plus résistante qu'avec un cadre collé classique, lorsque des contraintes importantes sont appliquées au cadre.

Les vitrages représentés sur les figures 4 et 5 sont, comme celui de la figure 1, prêts à être montés dans une baie de carrosserie.

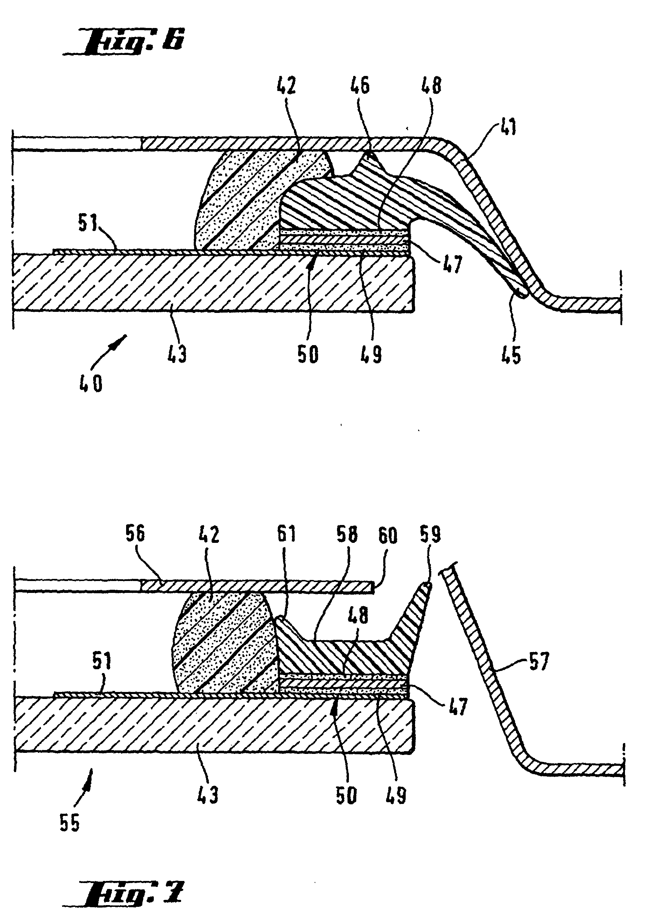

Les figures 6 et 7 illustrent des applications où des vitrages selon l'invention sont soumis à des efforts importants.

Le vitrage représenté sur la figure 6 est un vitrage automobile 40 monté fixe dans une baie de carrosserie 41 au moyen d'un cordon de colle 42. Ce vitrage comprend un substrat en verre 43 équipé d'un cadre périphérique 44 préfabriqué en un matériau élastomère dont une première fonction est d'assurer le centrage du vitrage dans la baie au moyen d'une lèvre longitudinale 45 analogue à la lèvre 33 représentée sur la figure 5 et décrite précédemment, et une seconde fonction est de limiter latéralement l'expansion du cordon de colle de pose 42, au moyen notamment de la nervure 46.

Le cadre 44 est fixé sur le substrat 43 grâce à un intercalaire de liaison 50 constitué d'un ruban métallique 47 revêtu d'une part d'un adhésif thermoactivable 48 et d'autre part d'un ruban adhésif double-face 49 collé sur un revêtement émaillé 51 s'étendant sur la zone marginale de la face intérieure du substrat 43.

Lors de la mise en place du vitrage équipé de son cadre 44 dans la baie de carrosserie, la lèvre 45 initialement sensiblement parallèle à la surface du substrat 43 se déforme pour se loger entre le chant du substrat et le fond de la feuillure de la baie 41.

En dépit des efforts transmis au cadre du fait de cette déformation, qui sont plus particulièrement importants dans le sens du décollement, la résistance de la liaison conférée par l'intercalaire selon l'invention est telle que le vitrage conserve toute son intégrité.

Le vitrage représenté sur la figure 7 est un vitrage automobile 55 monté sur un élément 56 de carrosserie, tel qu'un hayon, mobile par rapport au reste de la carrosserie 57. Le vitrage a une structure similaire à celle du vitrage 40 de la figure 6. A cet effet, les références de la figure 6 ont été réutilisées pour désigner des objets identiques. Le substrat 43 est équipé d'un cadre périphérique 58 préfabriqué en matière plastique pourvu sur au moins une partie de sa périphérie d'une lèvre 59. Typiquement, une telle lèvre a pour fonction d'obturer l'espace libre entre le bord du hayon et la carrosserie. Lorsque l'on ouvre le hayon par pivotement autour d'un axe parallèle au chant 60 de l'élément mobile, la lèvre 59 vient en appui contre la tôle 57, se déforme et transmet des efforts au cadre 58 dans le sens du décollement. Comme précédemment, l'intercalaire de liaison selon l'invention procure une force de liaison qui résiste à ces efforts.

En variante, au lieu d'être disposé à côté du cadre 58, le cordon de colle 42 pourrait aussi bien être déposé sur le cadre lui-même dans le canal délimité par le bas de la lèvre 59 et la paroi 61, ou bien à la fois sur la couche émaillée 51 et le cadre 58 en chevauchant la paroi 61. Dans ces variantes, l'intercalaire de liaison selon l'invention procure également une résistance aux efforts supportés et transmis par le cordon de colle.

Le système de fixation de vitrages qui vient d'être décrit est tout particulièrement approprié pour l'équipement de vitrages de forme anguleuse, plus précisément comportant des coins à angle vif, qui ne se prêtent pas à la technique de l'extrusion.

De même, il s'applique très avantageusement à l'équipement de vitrages galbés (à surface tridimensionnelle) en fournissant une solution peu coûteuse et facile à mettre en oeuvre.

Dans la description détaillée qui vient d'être donnée, tous les exemples de vitrages comprenaient un substrat monolithique en verre plat. Il va de soi que l'invention s'applique aussi aux vitrages en matière plastique, aux vitrages feuilletés, éventuellement galbés. Les différents modes de réalisation présentés se transposent aisément à ces autres types de vitrages, dans des applications non limitées aux véhicules automobiles.

## Revendications

1. Vitrage équipé d'un cadre (3 ; 21 ; 32 ; 44 ; 58) en matière plastique préfabriqué collé sur la périphérie du vitrage (1 ; 20 ; 30 ; 43) par l'intermédiaire d'au moins un intercalaire de liaison, **caractérisé en ce que** l'intercalaire (7 ; 22 ; 35 ; 50) comprend un élément métallique (9 ; 25 ; 36; 47) dont une première face est liée au cadre et au moins une seconde face porte un adhésif (10 ; 26 ; 38 ; 49) au contact du vitrage.

2. Vitrage selon la revendication 1, **caractérisé en ce que** la première face de l'élément métallique (9 ; 25 ; 36 ; 47) est rendue solidaire du cadre par accrochage mécanique et/ou par l'intermédiaire d'un adhésif (8 ; 24 ; 48).

3. Vitrage selon l'une des revendications 1 ou 2, **caractérisé en ce que** la seconde face de l'élément métallique (36 ; 47) est accolée à un ruban adhésif double-face (38 ; 49).

4. Vitrage selon l'une des revendications 1 ou 2, **caractérisé en ce que** la seconde face de l'élément métallique (9 ; 25) est accolée à une couche d'adhésif thermoactivable (10 ; 26).

5. Vitrage selon la revendication 4, **caractérisé en ce que** le cadre (21) présente une gorge longitudinale dans laquelle est insérée la bordure (20a) du vitrage et dont une paroi (21b) recouvre la face du vitrage qui n'est pas au contact de l'intercalaire de liaison (22).

6. Vitrage selon l'une quelconque des revendications précédentes, **caractérisé en ce que** l'intercalaire de liaison (7) est équipé de moyens (14) de raccordement de l'élément métallique (9) à une source de courant électrique.

7. Cadre en matière plastique (3 ; 21 ; 32 ; 44 ; 58) préfabriqué destiné à être collé sur un vitrage (1 ; 20 ; 30 ; 43), **caractérisé en ce qu'**il comprend au moins un élément métallique (9 ; 25 ; 36 ; 47) dont une première face est liée à la surface du cadre ( 3 ; 21 ; 32 ; 44 ; 58).

8. Cadre selon la revendication 7, **caractérisé en ce que** la première face de l'élément métallique (9 ; 25; 36; 47) est rendue solidaire du cadre (3 ; 21 ; 32 ; 44 ; 58) par accrochage mécanique et/ou par l'intermédiaire d'un adhésif (8 ; 24 ; 48).

9. Cadre selon l'une des revendications 7 ou 8, **caractérisé en ce qu'**il est prêt à être collé sur le vitrage et **en ce qu'**au moins une seconde face de l'élément métallique (9, 25 ; 36 ; 47) porte un adhésif (10 ; 26 ; 38 ; 49) destiné à être au contact du vitrage.

10. Cadre selon la revendication 9, **caractérisé en ce que** l'adhésif porté par la seconde face métallique est une couche d'adhésif thermoactivable (10 ; 26) ou un ruban adhésif double-face (38 ; 49).

11. Cadre selon l'une quelconque des revendications 7 à 10, **caractérisé en ce qu**'il comporte des moyens (14) de raccordement de l'élément métallique (9) à une source de courant électrique.

12. Cadre selon l'une quelconque des revendications 7 à 11, **caractérisé en ce que** la surface destinée à être collée sur le vitrage est plane.

13. Intercalaire de liaison (7 ; 22 ; 50) destiné à être interposé entre un cadre en matière plastique (3 ; 21 ; 44 ; 58) préfabriqué et un vitrage (1 ; 20 ; 43), **caractérisé en ce qu'**il comprend un élément métallique (9 ; 25 ; 47) dont chaque face est recouverte d'une couche adhésive (8, 10 ; 24, 26 ; 48, 49).

14. Intercalaire de liaison selon la revendication 13, **caractérisé en ce que** l'une des couches adhésives est constituée d'un adhésif thermoactivable (48) et l'autre est constituée d'un ruban adhésif double-face (49).

15. Intercalaire de liaison selon la revendication 13, **caractérisé en ce que** les couches adhésives sont constituées de deux adhésifs thermoactivables (8, 10) de températures d'activation différentes.

16. Procédé de fabrication d'un cadre (3 ; 32) selon l'une quelconque des revendications 7 à 12, comprenant une étape d'injection de matière plastique dans un moule (15, 16), **caractérisé en ce qu'**il comprend une étape préalable dans laquelle on dispose dans le moule (15) au moins un élément métallique (9 ; 36) muni sur une première face de moyens (8 ; 37) de fixation au cadre et **en ce que** l'on maintient cet élément en place dans le moule pendant l'étape d'injection, de telle sorte que seule sa première face soit exposée à la matière injectée.

17. Procédé selon la revendication 16, **caractérisé en ce que** dans l'étape préalable on dispose sur la face de l'élément métallique (9) exposée à la matière injectée une pièce d'adhésif thermoactivable (8) constituant lesdits moyens de fixation.

18. Procédé de montage sur un vitrage, notamment un vitrage galbé, d'un cadre en matière plastique préfabriqué par injection dans un moule, notamment un moule tridimensionnel, comprenant les étapes consistant à :
- disposer dans le moule au moins un élément métallique muni sur une première face de moyens de fixation au cadre, et éventuellement sur une deuxième face d'une couche adhésive,
- injecter dans ce moule la matière plastique,
- ouvrir le moule,
- le cas échéant disposer une couche adhésive sur une deuxième face de l'élément métallique,
- coller le vitrage sur ladite couche adhésive, et
- extraire du moule l'ensemble constitué par le vitrage et le cadre.

## Patentansprüche

1. Verglasung, die mit einem vorgefertigten Kunststoffrahmen (3; 21; 32; 44; 58) ausgestattet ist, der über mindestens eine Verbindungslage auf den Rand der Glasscheibe (1; 20; 30; 43) geklebt ist, **dadurch gekennzeichnet, dass** die Verbindungslage (7; 22; 35; 50) ein Metallelement (9; 25; 36; 47) umfasst, wovon die erste Seite mit dem Rahmen verbunden ist und mindestens eine zweite Seite ein in Kontakt mit der Glasscheibe befindliches Haftmittel (10; 26; 38, 49) trägt.

2. Verglasung nach Anspruch 1, **dadurch gekennzeichnet, dass** die erste Seite des Metallelements (9; 25; 36; 47) mit dem Rahmen durch mechanisches Verrasten und/oder ein Haftmittel (8; 24; 48) fest verbunden worden ist.

3. Verglasung nach Anspruch 1 oder 2, **dadurch gekennzeichnet, dass** die zweite Seite des Metallelements (36; 47) mit einem beidseitig haftenden Klebeband (38; 49) beklebt ist.

4. Verglasung nach Anspruch 1 oder 2, **dadurch gekennzeichnet, dass** die zweite Seite des Metallelements (9; 25) mit einer thermoaktivierbaren Haftschicht (9; 26) beklebt ist.

5. Verglasung nach Anspruch 4, **dadurch gekennzeichnet, dass** der Rahmen (21) eine Längsnut aufweist, in welche der Rand (20a) der Glasscheibe eingefügt ist und von welcher eine Wand (21b) die Seite der Glasscheibe bedeckt, die sich nicht in Kontakt mit der Verbindungslage (22) befindet.

6. Verglasung nach einem der vorhergehenden Ansprüche, **dadurch gekennzeichnet, dass** die Verbindungslage (7) mit Mitteln (14) für den Anschluß des Metallelements (9) an eine elektrische Stromquelle ausgestattet ist.

7. Kunststoffrahmen (3; 21; 32; 44; 58), der vorgefertigt und vorgesehen ist, auf eine Glasscheibe (1; 20; 30; 43) geklebt zu werden, **dadurch gekennzeichnet, dass** er mindestens ein Metallelement (9; 25; 36; 47) umfasst, wovon die erste Seite mit der Oberfläche des Rahmens (3; 21; 32; 44; 58) verbunden ist.

8. Rahmen nach Anspruch 7, **dadurch gekennzeichnet, dass** die erste Seite des Metallelements (9; 25; 36; 47) mit dem Rahmen (3; 21; 32; 44; 58) durch mechanisches Verrasten und/oder ein Haftmittel (8; 24; 48) fest verbunden worden ist.

9. Rahmen nach Anspruch 7 oder 8, **dadurch gekennzeichnet, dass** er fertig ist, auf die Glasscheibe geklebt zu werden, **und dass** mindestens eine zweite Seite des Metallelements (9; 25; 36; 47) ein Haftmittel (10; 26; 38, 49) trägt, das vorgesehen ist, mit der Glasscheibe in Kontakt zu kommen.

10. Rahmen nach Anspruch 9, **dadurch gekennzeichnet, dass** das von der zweiten metallischen Seite getragene Haftmittel eine thermoaktivierbaren Haftschicht (10; 26) oder ein beidseitig haftendes Klebeband (38; 49) ist.

11. Rahmen nach einem der Ansprüche 7 bis 10, **dadurch gekennzeichnet, dass** er Mittel (14) für den Anschluß des Metallelements (9) an eine elektrische Stromquelle umfasst.

12. Rahmen nach einem der Ansprüche 7 bis 11, **dadurch gekennzeichnet, dass** die Fläche, die auf die Glasscheibe geklebt werden soll, eben ist.

13. Verbindungslage (7; 22; 50), die vorgesehen ist, zwischen einem vorgefertigten Kunststoffrahmen (3; 21; 44; 58) und einer Glasscheibe (1; 20; 43) eingelegt zu werden, **dadurch gekennzeichnet, dass** sie ein Metallelement (9; 25; 47) umfasst, wovon jede Seite mit einer Haftschicht (8, 10; 24, 26; 48, 49) überzogen ist.

14. Verbindungslage nach Anspruch 13, **dadurch gekennzeichnet, dass** eine der Haftschichten aus einem thermoaktivierbaren Haftmittel (48) und die andere aus einem beidseitig haftenden Klebeband (49) besteht.

15. Verbindungslage nach Anspruch 13, **dadurch gekennzeichnet, dass** die Haftschichten aus zwei Haftmitteln (8, 10) bestehen, die bei unterschiedlichen Temperaturen thermoaktivierbar sind.

16. Verfahren zur Herstellung eines Rahmens (3; 32) nach einem der Ansprüche 7 bis 12, welches eine Stufe zum Spritzgießen eines Kunststoffs in eine Form (15, 16) umfasst, **dadurch gekennzeichnet, dass** es eine vorhergehende Stufe enthält, in welcher mindestens ein Metallelement (9; 36), das auf einer ersten Seite mit Mitteln (8; 37) zur Befestigung am Rahmen versehen ist, in der Form (15) angeordnet wird, **und dass** dieses Element beim Spritzgießen an seiner Stelle in der Form derart gehalten wird, dass nur seine erste Seite dem eingespritzten Material ausgesetzt ist.

17. Verfahren nach Anspruch 16, **dadurch gekennzeichnet, dass** in der vorhergehenden Stufe auf der dem eingespritzten Material ausgesetzten Seite des Metallelements (9) ein thermoaktivierbares Haftteil (8) angeordnet wird, das die Befestigungsmittel bildet.

18. Verfahren zum Anbringen eines durch Spritzgießen in einer speziell dreidimensionalen Form vorgefertigten Kunststoffrahmens an einer insbesondere gebogenen Glasscheibe, das die Stufen umfasst, die aus
- Anordnen mindestens eines Metallelements, das auf der ersten Seite mit Mitteln zur Befestigung am Rahmen und gegebenenfalls auf einer zweiten Seite mit einer Haftschicht versehen ist, in der Form,
- Einspritzen des Kunststoffs in die Form,
- Öffnen der Form,
- gegebenenfalls Anordnen einer Haftschicht auf einer zweiten Seite des Metallelements,
- Kleben der Glasscheibe auf die Haftschicht und
- Entnehmen der aus der Glasscheibe und dem Rahmen bestehenden Einheit aus der Form
bestehen.

## Claims

1. Glazing equipped with a prefabricated plastic frame (3; 21; 32; 44; 58) bonded to the periphery of the glazing (1; 20; 30; 43) by means of at least one connecting insert, **characterised in that** the insert (7; 22; 35; 50) comprises a metallic element (9; 25; 36; 47), a first face of which is connected to the frame and at least a second face of which carries an adhesive (10; 26; 38; 49) in contact with the glazing.

2. Glazing according to Claim 1, **characterised in that** the first face of the metallic element (9; 25; 36; 47) is fixed to the frame by mechanical attachment and/or by means of an adhesive (8; 24; 48).

3. Glazing according to one of Claims 1 or 2, **characterised in that** the second face of the metallic element (36; 47) is stuck to a double-face adhesive strip (38; 49).

4. Glazing according to one of Claims 1 or 2, **characterised in that** the second face of the metallic element (9; 25) is stuck to a heat-activated adhesive layer (10; 26).

5. Glazing according to Claim 4, **characterised in that** the frame (21) has a longitudinal groove in which the rim (20a) of the glazing is inserted and one wall (21b) of which covers the face of the glazing which is not in contact with the connecting insert (22).

6. Glazing according to any one of the preceding claims, **characterised in that** the connecting insert (7) is equipped with means (14) of connecting the metallic element (9) to a source of electric current.

7. Prefabricated plastic frame (3; 21; 32; 44; 58) intended to be bonded to glazing (1; 20; 30; 43), **characterised in that** it comprises at least one metallic element (9; 25; 36; 47), a first face of which is connected to the surface of the frame (3; 21; 32; 44; 58).

8. Frame according to Claim 7, **characterised in that** the first face of the metallic element (9; 25; 36; 47) is fixed to the frame (3; 21; 32; 44; 58) by mechanical attachment and/or by means of an adhesive (8; 24; 48).

9. Frame according to one of Claims 7 or 8, **characterised in that** it is ready to be bonded to the glazing and **in that** at least a second face of the metallic element (9; 25; 36; 47) carries an adhesive (10; 26; 38; 49) intended to be in contact with the glazing.

10. Frame according to Claim 9, **characterised in that** the adhesive carried by the second metallic face is a layer of heat-activated material (10; 26) or a double-face adhesive strip (38; 49).

11. Frame according to any one of Claims 7 to 10, **characterised in that** it has means (14) of connecting the metallic element (9) to a source of electric current.

12. Frame according to any one of Claims 7 to 11, **characterised in that** the surface intended to be glued to the glazing is flat.

13. Connecting insert (7; 22; 50) intended to be interposed between a prefabricated plastic frame (3; 21; 44; 58) and glazing (1; 20; 48), **characterised in that** it comprises a metallic element (9; 25; 47), each face of which is covered with an adhesive layer (8, 10; 24, 26; 48, 49).

14. Connecting insert according to Claim 3, **characterised in that** one of the adhesive layers consists of a heat-activated adhesive (48) and the other consists of a double-face adhesive strip (49).

15. Connecting insert according to Claim 13, **characterised in that** the adhesive layers consist of two heat-activated adhesives (8, 10) with different activation temperatures.

16. Method of manufacturing a frame (3; 32) according to any one of Claims 7 to 12, comprising a step of injecting plastics material into a mould (15, 16), **characterised in that** it comprises a prior step in which there is disposed in the mould (15) at least one metallic element (9; 36) provided on a first face with means (8; 37) of fixing to the frame and **in that** this element is held in place in the mould during the injection step, so that only its first face is exposed to the injected material.

17. Method according to Claim 16, **characterised in that**, in the prior step, a piece of heat-activated adhesive (8) constituting the said fixing means is disposed on the face of the metallic element (9) exposed to the injected material.

18. Method of mounting on glazing, notably curved glazing, a prefabricated plastic frame by injection in a mould, notably a three-dimensional mould, comprising the steps consisting of:
- disposing in the mould at least one metallic element provided on a first face with means of fixing to the frame, and possibly on a second face an adhesive layer,
- injecting the plastics material into this mould,
- opening the mould,
- where necessary disposing an adhesive layer on a second face of the metallic element,
- bonding the glazing to the said adhesive layer, and
- extracting from the mould the assembly consisting of the glazing and the frame.
